# EUROPÄISCHE PATENTSCHRIFT

(11) **EP 2 395 457 B1**
(45) Veröffentlichungstag und Bekanntmachung des Hinweises auf die Patenterteilung: **27.03.2013**
(21) Anmeldenummer: 11168939.4
(22) Anmeldetag: 07.06.2011
(51) Int. Cl.: G06K 7/10, G06K 17/00

(54) **Inventarisierungssystem auf der Basis eines RFID-Systems**
Inventory taking system on the basis of a RFID system
Système d'inventaire basé sur un système RFID

(30) Priorität: 08.06.2010 DE 102010023051
(43) Veröffentlichungstag der Anmeldung: 14.12.2011
(73) Patentinhaber: Achterberg GmbH, 46499 Hamminkeln-Brünen (DE)
(72) Erfinder: Grewing, Christoph, 46348 Raesfeld (DE); Mierkiewicz, Thomas, 46145 Oberhausen (DE)
(74) Vertreter: Schaumburg, Thoenes, Thurn, Landskron, Eckert

(56) Entgegenhaltungen:
- EP-A2- 0 689 151
- WO-A1-2008/055761
- US-A1- 2009 267 772

## Beschreibung

Die Erfindung betrifft ein Inventarisierungssystem auf der Basis eines RFID-Systems. Ein solches System soll vorzugsweise zur Identifikation von Gütern oder Waren in Produktionsbetrieben dienen, oder in weiteren Bereichen, wie in der Beschaffungs- und Distributionslogistik, im Handel oder anderen Materialflusssystemen.

Ein RFID-System besteht aus mindestens einem Lesegerät zum Auslesen von Daten, die in einem Transponder (RFID-Tag) gespeichert sind, wobei die Datenübertragung zwischen Transponder und Lesegerät mittels elektromagnetischer Wellen stattfindet. Gängige Frequenzen der RFID-Systeme liegen in der Größenordnung von einigen hundert MHz oder im Bereich von 0,8 bis 8 GHz.

Bei Transpondern, die z. B. in Form von Etiketten oder dergleichen insbesondere an Gütern oder Waren angebracht oder in deren Verpackung integriert sein können, unterscheidet man aktive und passive Transponder: aktive Transponder besitzen eine eigene Energieversorgung, z. B. in Form einer Batterie. Passive Transponder nutzen hingegen die Strahlungsenergie eines RFID-Senders (der z. B. im Lesegerät integriert sein kann) zum Senden der eigenen Information an das Lesegerät. Die RFID-Sendeleistung eines Lesegeräts kann im Bereich bis zu 10 W liegen, wobei die maximal gesetzlich zulässige Sendeleistung eingehalten werden muss.

Es ist ein Inventarisierungssystem für in einem Regal gelagerte Waren bekannt, wobei der RFID-Leser an dem Regal vorbeifährt (WO 2007136353 A). Ein anderes mobiles System ist bekannt, wo das RFID-System auf einem Gabelstapler angeordnet ist (DE 102007004200 A1).

In der DE 102006049579 A1 ist ein System zum Lesen von RFID-Transpondern beschrieben, bei dem ein strahlungsabgeschirmter Erfassungsbereich vorhanden ist. Der Erfassungsbereich ist mit einer Tür versehen, so dass ein Fahrzeug in den Erfassungsraum hineinfahren kann. Solche oder ähnliche Systeme arbeiten mit einem starren "Sende-/Empfangsfeld".

Ein ähnliches System gemäß den Merkmalen des Oberbegriffs des Anspruchs 1 ist aus EP 0 689 151 bekannt.

An zur Abschirmung eingesetzten metallischen Oberflächen werden elektromagnetische Wellen reflektiert und es können Vielfach-Reflexionen stattfinden. Dabei entsteht ein räumliches Interferenzmuster, in denen sich die Teilwellen überlagern. Die Interferenzen können konstruktiv, das heißt verstärkend oder destruktiv, abschwächend sein. Im Fall der destruktiven Interferenz spricht man von "Löchern" oder toten Winkeln. Die typische Größe solcher Löcher sind einige wenige cm. Auch wenn das elektromagnetische Feld in den Löchern nicht total verschwindet, kann es doch so stark geschwächt sein, dass Transponder nicht mehr gelesen werden können. Somit ist aufgrund toter Winkel oder nicht korrekt ausgerichteter Transponder immer mit Lesefehlern zu rechnen.

Bei RFD-Systemen, in denen metallische Artikel mit Transpondern ettiketiert sind, besteht die besondere Schwierigkeit der Identifizierung, dass destruktive Interferenz in unmittelbarer Nähe von metallischen Oberflächen und damit am Ort eines aufgebrachten Transponders auftritt. RFD-Systeme zur Erfassung metallischer Artikel stellen also eine besondere Herauforderung dar.

Es ist die Aufgabe der Erfindung, eine Weiterbildung eines RFID-Systems anzugeben, wobei das System zweiteilig ausgebildet sein soll.

Die Lösung findet sich im Hauptanspruch. Weiterführende Ausgestaltungen sind in Unteransprüchen formuliert.

Ein wesentlicher der Kern der Erfindung ist, dass der Erfassungsbereich des RFID-Systems durch ein metallisch ausgebildetes Terminalgehäuse und mindestens eine metallische Gehäusewand (vorzugsweise ein Unterboden und/oder eine metallische Tür) des Kontrollwagens definiert ist. Hierbei ist der Erfassungsbereich erst nach vollständigem Einführen des Kontrollwagens in das Terminalgehäuse vollständig metallisch geschirmt. Der Kontrollwagen füllt den Innenraum des Terminalgehäuses möglichst passgenau und vollständig aus. Der Raum des Erfassungsbereichs hat die Form eines Quaders und hat etwa ein Volumen von ca. 1 m³.

Das Kontrollterminal hat etwa einen quaderförmigen Aufbau. In einem, vorzugsweise oben liegenden Gehäuseteil sind mechanische und elektronische Elemente des Systems einschließlich Antennen vorhanden. Im tiefer liegenden Gehäuseteil ist der ebenfalls quaderförmig ausgebildete Erfassungsbereich vorhanden, in den der Kontrollwagen durch mindestens eine offene Einschuböffnung eingeschoben wird. Öffnungen können sowohl vorn als auch hinten (in Einschubrichtung des Kontrollwagens) ausgebildet sein. Wobei die Einschuböffnungen mit je einer Tür verschließbar sein können.

Im Einsatz der Erfindung wird mindestens eine Antenne im Erfassungsbereich bewegt. Die mindestens eine Antenne wird oberhalb des Erfassungsbereichs um einige cm linear oder auf einer Kurvenbahn bewegt. Die Häufigkeit der Lesewiederholungen ist einstellbar.

Ein besonderer Vorteil eines Systems, in dem zwei Antennen eingesetzt werden, besteht darin, dass durch das Bewegen beider Antennen die Orte der destruktiven Interferenz verschoben werden. Wenn ein RFID-TAG in Richtung der Feldlinien einer einzigen RFID-Antenne liegen sollte, kann dieser TAG nicht senden, da keine Spannung über die Antenne des TAGs induziert wird. Wenn zwei Antennen eingebaut sind, erhält man zwei verschiedene Feldlinienausrichtungen und somit wird in einem TAG immer eine Spannung induziert. Durch die Ortsverlagerung der Antenne(n) wird auch die gegenseitige Abschirmung der metallischen Artikel umgangen. Transponder auf einer der hinteren Flächen sind somit erfassbar, die sonst durch metallische Artikel auf einer der vorderen Flächen abgeschirmt wären. Die Erfassungswahrscheinlichkeit ist verbessert; jeder RFID-TAG liegt einmal in einem ausreichend starken Feld und sendet. Das Abscannen kann mehrfach wiederholt werden.

Bei der erfindungsgemäßen Anordnung sind Artikel, insbesondere in der Mehrzahl metallische Gegenstände auf mehreren Flächen aus Sicht der Antennen hintereinander liegend vorhanden.

Typische metallische Artikel, die im Kontrollterminal gescannt und geprüft werden sollen, sind: Werkzeuge für Werkzeugmaschinen, beispielsweise folgender Arten: Schraubwerkzeuge, Zerspanungswerkzeuge, Spannwerkzeuge, Messwerkzeuge, Schleif- und Trennwerkzeuge, Hand-und Montagewerkzeuge, Werkstattbedarf, Elektrowerkzeuge, jede Art von Schlüssel; Druckluftwerkzeuge, alle Arten von Waffen, Personenschutzartikel und weitere metallische Gegenstände. Ein kleine Zahl nichtmetallischer Artikel kann vorhanden sein.

Die in einer Vorgabeliste in der Datenbank des Rechnersystems des Kontrollterminals hinterlegten RFID-TAG-Nummern entsprechen den RFID-TAGs, mit denen die Artikel im Kontrollwagen ausgerüstet sind. Mit dem Kontrollterminal wird erfasst und geprüft, ob alle in der Datenbank in einer Vorgabeliste hinterlegten RFID-TAGs im Erfassungsbereich des Kontrollterminals, und damit im Kontrollwagen vorhanden sind. Es wird eine Vollständigkeitsprüfung vorgenommen.

Der Kontrollwagen ist im wesentlichen aus Kunststoff aufgebaut, insbesondere die Einlegeböden oder Schubfächer zur Aufnahme der Artikel sind nichtmetallisch. Der tiefste Boden des Kontrollwagens ist metallisch ausgebildet, wobei im Kontrollterminal kein Unterboden vorhanden ist. Das RFID-System arbeitet vorzugsweise in einem Frequenzbereich zwischen 860 MHz und 960 MHz (UHF), wodurch relativ kurze Wellenlängen der Radiowellen vorliegen und günstige Vorraussetzungen für Reflexionen an den Wänden des metallabgeschirmten Erfassungsbereichs gegeben sind.

Das System erkennt in einem Lesevorgang den Bestand an Artikeln im Kontrollwagen. Zur Unterscheidung verschiedener Kontrollwagen sind diese selbst mit einem eigenen RFID-TAG versehen. Es können somit auch Verwechselungen von Artikeln und/oder Beständen zwischen verschiedenen Kontrollwagen erkannt werden.

Die Komponenten des vorliegenden RFID-Systems sind vorzugsweise:
- Kontrollterminal mit metallischem Gehäuse und Einschuböffnung (vorzugsweise durch Tür verschließbare Einschuböffnung) zum Ein- und Ausfahren eines Kontrollwagens;
- Einbaufach für 2 RFID-Antennen auf einem gemeinsamen Gestänge oder getrennt aufgehängt, die angesteuert ca. 12 cm hin und her bewegt werden, mit einstellbarem Wiederholungsintervall;
- Schublade für USB-Tastatur, Anschlüsse, weitere RFID-Komponenten und Verkabelung und eingebaute Lüfter zur Wärmeabfuhr;
- für hohe Sendeleistung ausgelegte Flachantennen (Abmessungen 30 x 30 cm oder größer). Größe des Erfassungsraums ca. 1 m³. Der Leseabstand reicht bis etwa 1 m bei maximal erlaubter Leseenergie. Wegen der Ettiketierung von metallischen Artikeln werden spezielle RFID-TAGs eingesetzt (sogenannte on-metal-tags, beispielsweise nach US 7315248);
- Rechnersystem mit Monitor mit Touchscreen mit vorinstallierter Software;
- Datenbank mit Transponderdaten und Vorgabelisten von Transponderdaten; die Daten sind einzelnen Artikeln und verschiedenen Kontrollwagen zugeordnet.
- Kontrollwagen beladen mit in der Mehrzahl metallischen Artikeln, wobei die Artikel mit Transpondern gekennzeichnet sind;
- der Erfassungsbereich des Kontrollterminals ist durch das Terminalgehäuse und den Kontrollwagen definiert, wobei der Erfassungsbereich erst nach vollständigem Einführen des Kontrollwagens ringsum metallisch geschirmt ist;
- Kontrollterminal und Kontrollwagen bilden gemeinsam die Einheit des erfindungsgemäßen RFID-Systems.

Die in der Datenbank hinterlegten Informationen sind Vorgabelisten, Artikelnummern, Artikelbezeichnungen, Artikelbilder, Kennung von Kontrollwagen, und vorgesehener Lagerplatz und andere Kennungen.

Der Erfassungsbereich ist zur Begrenzung und Abschirmung nach außen metallisch geschirmt. Hierzu kann entweder das Terminalgehäuse ringsum mit metallischen Wänden versehen sein, von denen mindestens eine Wand als Einschuböffnung (offener Zugang) ausgebildet ist. Zum Schließen der Einschuböffnung kann eine Tür im Terminalgehäuse vorgesehen sein. Die Abschirmung des Terminalgehäuses und das Schließen der Öffnung wird durch den eingeschobenen Kontrollwagen vervollständigt. Beispielweise hat das Terminalgehäuse auf der Vorderseite und auf der Rückseite keine metallischen Flächen (Wände). Demgegenüber kann der Kontrollwagen auf seiner Vorderseite, auf seiner Rückseite und auf seiner Bodenseite mit metallischen Flächen ausgestattet sein, so dass das System erst mit in das Terminalgehäuse eingeschobenem Kontrollwagen metallisch ringsum geschirmt ist. Für empfindliche oder sicherheitsrelevante Artikel kann der Kontrollwagen auch ringsum mechanisch verschlossen sein, und nur für befugte Personen mit Sicherheitsschlüsseln zugänglich sein. Eine solche Beladung wären beispielsweise Waffen, wobei der Kontrollwagen den zugehörigen Waffenschrank bildet.

Vorteile des Systems: Durch die Verwendung von Einlegeböden oder Schubladen aus Kunststoff im Kontrollwagen sind bei voller Beladung alle Transponder auf metallischen Artikeln auch in der vom Lesegerät weitest entfernten Ebene erfassbar.

### Kurze Beschreibung eines Identifizierungslaufs

Die Software startet automatisch und auf dem Bildschirm erscheint ein Prüfformular. Der mit Artikeln beladene und zu prüfende Kontrollwagen befindet sich im Kontrollterminal. Mit Betätigen eines Check-Button startet der Lesevorgang. Der Lese-Fortschritt wird an einer Laufleiste angezeigt. Die Antennen werden über den Kontrollwagen hinweg gefahren. Werden alle Artikel komplett aus einer Vorgabeliste gefunden, wird eine Meldung "OK" ausgegeben.

Sollten vom System nicht alle Artikel aus der Vorgabeliste gefunden worden sein, wird eine entsprechende Anzeige dargestellt. Dies bedeutet, dass die Beladung gemäß Vorgabeliste nicht komplett ist. Mit dem Quittieren der Anzeige erscheint eine Liste von fehlenden Artikeln in einer Tabelle mit den hinterlegten Informationen. Ebenso kann ein Bild eines Artikels im JPG-Format angezeigt werden. Wenn auf das Artikel-Bild geklickt wird, wird dieses gezoomt und vergrößert dargestellt. Der Benutzer kann nun anhand der Angaben prüfen, welcher Fehler hinter der Fehlermeldung steckt: ob ein Artikel fehlt; ob ein Problem mit einem RFID-TAG vorliegt oder ein anderer Fehler.

Zur Ergänzung und Erweiterung der Erfindung werden weitere vorteilhafte Merkmale aufgezählt, die einzeln oder gemeinsam realisiert sein können.

Die Antennen können gemeinsam oder unabhängig voneinander bewegbar sein.

Die Einschuböffnung des Erfassungsbereichs kann als schwenkbare Tür, als Schiebetür oder als Schwingtür ausgebildet sein; sie kann auch automatisch öffnend und schließend ausgestaltet sein.

In einer Ausbildung des Terminals können zwei Einschuböffnungen (Türen) vorgesehen sein, von welchen eine zum Einbringen und eine andere zum Ausbringen des Kontrollwagens vorgesehen ist.

Das Kontrollterminal muss nicht stationär gestaltet sein, es kann auch selbst auf Rollen bewegbar sein.

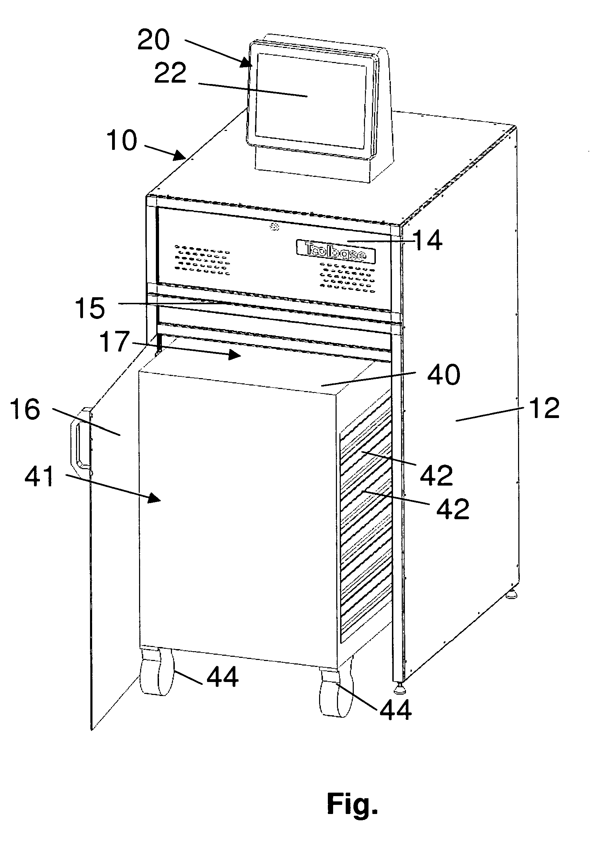

Die Erfindung wird nachfolgend anhand eines bevorzugten Ausführungsbeispiels mit Bezug auf die beigefügte Zeichnung weiter beschrieben.

Die Figur zeigt ein Kontrollterminal mit eingefahrenem Kontrollwagen, bei geöffneter Tür.

Es ist dargestellt das Kontrollterminal 10 mit Gehäuse 12, dessen Inneres den Erfassungsbereich 17 des RFID-Systems bildet. Das Kontrollterminal 10 hat mindestens eine verschließbare Einschuböffnung und ist ringsum mit metallischen Wänden 18 abgeschirmt. Die Tür 16 bildet den nach vorn begrenzender Teil der metallischen Abschirmung 12. Oben auf dem Gehäuse 12 des Kontrollterminals 10 befindet sich ein Monitor 20 mit Touch-Screen 22.

Zum Einbringen und Ausbringen des Kontrollwagens 40 wird die Tür 16 geöffnet und der Kontrollwagen mit mit Transpondern versehenen Artikeln (insbesondere metallische Artikel) in den Erfassungsbereich 17 geschoben. Der Kontrollwagen ist entweder oben offen oder oben mit einem Kunststoffdeckel versehen. Die RFID-Erfassung erfolgt unter Verwendung eines mit einer oder mit zwei Flachantennen ausgebildeten Lesegeräts. Nach Abschluss des Identifikationsprozess wird die Tür wieder geöffnet und der Kontrollwagen 40 aus dem Kontrollterminal herausgenommen.

In einem Geräteeinschub 14 sind Elektronikteile (insbesondere RFID-Komponenten, Computer etc.) untergebracht. Insbesondere weist der Geräteeinschub 14 auch einen Lüfter zum Abführen der Abwärme auf. Der Geräteeinschub 14 kann auch eine ausziehbare, ansonsten verdeckte Schublade für manuelle Eingaben (als USB-Tastatur) aufweisen. Unterhalb des Geräteeinschubs 14 befindet sich ein Fach 15 zur Unterbringung der RFID-Antennen. Das Fach 15 ist nach unten zum Erfassungsbereich hin 12, 17 offen. Die Antennen sind in dem Fach 15 aufgehängt und von einer Mechanik automatisch bewegbar.

Der Kontrollwagen 40 weist übereinander angeordnet mehrere Ebenen mit bewegbaren Schubladen oder ausfahrbaren Einlegeböden 42 auf. Die vom RFID-System zu erfassenden und zu identifizierenden Artikel befinden sich in den Schubladen 42. Der Kontrollwagen 40 ist auf Rollen 44 gelagert. Der Kontrollwagen 40 ist im wesentlichen aus Kunststoff-Teilen zusammengesetzt. Die (sichtbare, linke) Seitenwand 41 kann auch als Metallfläche ausgebildet sein.

Ein Kontrollwagen kann bevorzugt dadurch weitergebildet sein, dass im Kontrollwagen 40 für die Artikel fest zugeordnete Plätze vorhanden sind. Die Artikel werden in Einlegeschalen aus Kunststoff (Schaumstoff) in die Schubladen oder die Einlegeböden eingelegt. Bei dieser Lagerung erhalten die Artikel einen ausreichenden Abstand untereinander. Es kann somit bei der Beladung auf festen Lagerplätzen vermieden werden, dass (auch unbeabsichtigt) zwei metallische Artikel so übereinander liegen, dass eine gegenseitige Störung entsteht. Die Artikel liegen in Positionen, in denen sie sicher gelesen werden.

Das vorgeschlagene RFID-Inventarisierungssystem umfasst mindestens zusammenfassend aufgezählt:
- einen mit metallischen Artikeln beladenen Kontrollwagen 40, wobei die Artikel mit Transpondern gekennzeichnet sind,
- ein Kontrollterminal 10, in dem enthalten sind: RFID-Elektronik, insbesondere Computer, Datenbank und Software mit Daten verfügbarer Artikel und Werkzeuge,
- ein Monitor 22 zur Bedienung,
- der Erfassungsbereich 17 des Systems ist durch das metallisch abgeschirmte Terminalgehäuse 12 gemeinsam mit den Metallwänden des Kontrollwagens definiert,
- im Terminalgehäuse 12 ist eine mit einer metallischen Tür 16 verschließbare Einschuböffnung vorhanden,
- mindestens eine Antenne eines Lesegeräts wird eingesetzt zur Abfrage eines in den Erfassungsbereich 17 eingefahrenen und mit Artikeln beladenen Kontrollwagens 40, wobei die mindestens eine Antenne im Erfassungsbereich 17 hin- und her bewegbar ist.

### Bezugszeichen

- 10: Kontrollterminal
- 12: Gehäuse
- 14: Installation (Einschub) mit Computer, Lüfter .. etc.
- 15: Fach für Antennen
- 16: Einschuböffnung; metallisch verschließbare Tür
- 17: Erfassungsbereich
- 20: Monitor
- 22: Touch-Screen
- 40: Kontrollwagen
- 41: Wand (Metallfläche)
- 42: Einlegeböden, Schubladen
- 44: Rollen am Kontrollwagen

## Patentansprüche

1. Inventarisierungssystem auf der Basis eines RFID-Systems zum Identifizieren von Transpondern, die sich in einem räumlichen, metallisch abgeschirmten Erfassungsbereich (17) mindestens eines Lesegeräts befinden, wobei das Inventarisierungssystem ein Kontrollterminal (10) und mindestens einen Kontrollwagen (40) umfasst:
wobei das Kontrollterminal wie folgt ausgebildet ist:
• es umfasst mindestens ein Rechnersystem mit Datenbank für Daten von zu identifizierenden Transpondern,
• es ist zur Aufnahme eines Kontrollwagens (40) ausgebildet,
• es weist ein mit einer Einschuböffnung (16) versehenes Terminalgehäuse (12) auf,
wobei der mindestens eine Kontrollwagen (40)
auf Rollen (44) bewegbar und einschiebbar in das Terminalgehäuse (12) ausgebildet ist,
**dadurch gekennzeichnet, dass**
der Kontrollwagen mit einem Transponder versehen ist, und
mindestens zwei aus Sicht des mindestens einen Lesegeräts hintereinander
liegend angeordnete Ebenen (42) zur Ablage von mit Transpondern versehenen Artikel umfasst,
wobei metallische Flächen des Terminalgehäuses (12) und metallische Flächen (41) des mindestens einen Kontrollwagens (40) gemeinsam den Erfassungsbereich (17) begrenzen.

2. Inventarisierungssystem nach Anspruch 2, **dadurch gekennzeichnet, dass** der Kontrollwagen (40) vollständig aus Kunststoff aufgebaut ist, mit Ausnahme einer metallisch ausgebildeten Unterseite und einer metallisch ausgebildeten Wagenseite (41).

3. Inventarisierungssystem nach Anspruch 1 oder 2, **dadurch gekennzeichnet, dass** der Kontrollwagen den Innenraum des Terminalgehäuses (12) passgenau ausfüllt.

4. Inventarisierungssystem nach einem der vorhergehenden Ansprüche, **dadurch gekennzeichnet, dass** zwei bewegbare Lesegeräte vorhanden sind.

5. Inventarisierungssystem nach Anspruch 4, **dadurch gekennzeichnet, dass** die Antennen gemeinsam oder unabhängig voneinander bewegbar sind.

6. Inventarisierungssystem nach einem der vorhergehenden Ansprüche, **dadurch gekennzeichnet, dass** die Einschuböffnung des Terminalgehäuses (12) als Tür (16) ausgebildet ist.

7. Inventarisierungssystem nach einem der vorhergehenden Ansprüche, **dadurch gekennzeichnet, dass** mit RFID-Tags ettiketierte und abfragbare Artikel auf einem Monitor (20) des Kontrollterminals (10) als Abbildung darstellbar sind.

8. Inventarisierungssystem nach einem der vorhergehenden Ansprüche, **dadurch gekennzeichnet, dass** im Kontrollwagen (40) für einzelne Artikel fest zugeordnete Plätze dadurch geschaffen sind, dass Einlegeböden aus Kunststoff vorliegen, in denen für einzelne Artikel Ausformungen ausgebildet sind, mit denen die zugeordneten Plätze definiert sind.

9. Inventarisierungssystem nach einem der vorhergehenden Ansprüche, **dadurch gekennzeichnet, dass** die im Kontrollwagen (40) vorhandenen Ebenen (42) als Schubfächer ausgebildet sind.

10. Inventarisierungssystem nach einem der vorhergehenden Ansprüche, **dadurch gekennzeichnet, dass** der Kontrollwagen (40) ringsum mechanisch geschlossen ist und der Verschluss nur mit Sicherheitswerkzeug oder Schlüsseln geöffnet werden kann.

## Claims

1. An inventory taking system on the basis of a RFID system for identifying transponders which are positioned in a spatial, metallic shielded detection zone (17) of at least one reader, wherein the inventory taking system comprises a control terminal (10) and at least one control carriage (40):
wherein said control terminal is formed as follows:
• it comprises at least one computer system with database for data of transponders to be identified,
• it is formed to receive a control carriage (40),
• it includes a terminal housing (12) provided with an insertion opening (16), wherein the at least one control carriage (40) is formed to be movable on rolls (44) and insertable into the terminal housing (12),
**characterized in that**
the control carriage is provided with a transponder, and
comprises at least two planes (42) arranged behind one another as seen from the at least one reader for depositing articles provided with transponders, wherein metallic surfaces of the terminal housing (12) and metallic surfaces (41) of the at least one control carriage (40) together delimit the detection zone (17).

2. The inventory taking system according to claim 2, **characterized in that** the control carriage (40) is completely made up of plastic, with the exception of a rear side being formed of metal and a carriage side (41) being formed of metal.

3. The inventory taking system according to claim 1 or 2, **characterized in that** the control carriage precisely fills out the internal space of the terminal housing (12).

4. The inventory taking system according to one of the preceding claims, **characterized in that** two movable readers are available.

5. The inventory taking system according to claim 4, **characterized in that** the antennas are movable together or independently from each other.

6. The inventory taking system according to one of the preceding claims, **characterized in that** the insertion opening of the terminal housing (12) is formed as a door (16).

7. The inventory taking system according to one of the preceding claims, **characterized in that** articles being tagged with RFID tags and being searchable are displayable as reproduction on a monitor (20) of the control terminal (10).

8. The inventory taking system according to one of the preceding claims, **characterized in that** fixedly assigned places for individual articles are created in the control carriage (40) **in that** bottom inserts made of plastic are available in which mouldings for individual articles are formed with which the assigned places are defined.

9. The inventory taking system according to one of the preceding claims, **characterized in that** the planes (42) available in the control carriage (40) are formed as drawers.

10. The inventory taking system according to one of the preceding claims, **characterized in that** the control carriage (40) is closed mechanically circumferentially and the locking mechanism can only be opened with security tools or keys.

## Revendications

1. Système d'inventaire basé sur un système RFID, destiné à identifier des transpondeurs situés dans une zone d'acquisition spatiale (17), métalliquement blindée, d'au moins un appareil de lecture, le système d'inventaire comprenant un terminal de contrôle (10) et au moins un chariot de contrôle (40) :
le terminal de contrôle étant réalisé de la manière suivants :
- il comprend au moins un système de calculateur pourvu d'une banque de données pour des données de transpondeurs à identifier,
- il est destiné à loger un chariot de contrôle (40),
- il comprend un boîtier de terminal (12) pourvu d'une ouverture d'introduction (16), le ou les chariots de contrôle (40) étant mobiles sur des rouleaux (44) et pouvant être introduits dans le boîtier de terminal (12),
**caractérisé en ce que** le chariot de contrôle est pourvu d'un transpondeur et comprend au moins deux plans (42) disposés l'un derrière l'autre, vu depuis le ou les appareils de lecture, et destinés à réceptionner des articles pourvus de transpondeurs, les surfaces métalliques du boîtier de terminal (12) et les surfaces métalliques (41) du ou des chariots de contrôle (40) délimitant conjointement la zone d'acquisition (17).

2. Système d'inventaire selon la revendication 2, **caractérisé en ce que** le chariot de contrôle (40) est entièrement constitué de plastique, à l'exception d'une face inférieure métallique et d'une face de chariot (41) métallique.

3. Système d'inventaire selon la revendication 1 ou 2, **caractérisé en ce que** le chariot de contrôle remplit l'espace intérieur du boîtier de terminal (12) avec une précision d'ajustage.

4. Système d'inventaire selon l'une quelconque des revendications précédentes, **caractérisé en ce que** deux appareils de lecture mobiles sont présents.

5. Système d'inventaire selon la revendication 4, **caractérisé en ce que** les antennes sont mobiles conjointement ou indépendamment les unes des autres.

6. Système d'inventaire selon l'une quelconque des revendications précédentes, **caractérisé en ce que** l'ouverture d'introduction du boîtier de terminal (12) est conçue comme une porte (16).

7. Système d'inventaire selon l'une quelconque des revendications précédentes, **caractérisé en ce que** des articles étiquetés avec des étiquettes RFID et pouvant être interrogés peuvent être représentés sur un moniteur (20) du terminal de contrôle (10) en tant que reproduction.

8. Système d'inventaire selon l'une quelconque des revendications précédentes, **caractérisé en ce que** des emplacements fixement associés à des articles individuels dans le chariot de contrôle (40) sont créés par le fait que des corps d'insertion en matière plastique sont présents, dans lesquels des protubérances permettant de définir les emplacements associés sont formées pour des articles individuels.

9. Système d'inventaire selon l'une quelconque des revendications précédentes, **caractérisé en ce que** les plans (42) présents dans le chariot de contrôle (40) sont conçus comme des tiroirs.

10. Système d'inventaire selon l'une quelconque des revendications précédentes, **caractérisé en ce que** le chariot de contrôle (40) est fermé mécaniquement sur le pourtour et la fermeture ne peut être ouverte qu'à l'aide d'un outil de sécurité ou de clés.
